# EUROPEAN PATENT APPLICATION

(11) **EP 2 330 808 A2**
(43) Date of publication of application: **08.06.2011**
(21) Application number: 10187853.6
(22) Date of filing: 18.10.2010
(51) Int. Cl.: H04M 1/725, G06F 3/048

(54) **Method and apparatus for displaying screens in a display system**

(30) Priority: 17.11.2009 KR 20090111044
(71) Applicant: Samsung Electronics Co., Ltd., Suwon-si, Gyeonggi-do (KR)
(72) Inventor: Kwak, Se Jin, Suwon-si, Gyeonggi-do (KR); Kim, Jong Hee, Suwon-si, Gyeonggi-do (KR)
(74) Representative: Jenkins, Richard Gavin

(57) **Abstract**

A screen displaying method and apparatus for displaying screens in a display system are provided. The method includes setting at least one Activation Information Region (AIR) and at least one Deactivation Information Region (DIR) to a screen of the display system, displaying items on at least one set AIR and at least one set DIR, detecting a touch gesture applied to the AIR or the DIR, executing a function corresponding to the touch gesture applied to the AIR, and altering and displaying an image of at least one item in the DIR according to the touch gesture applied to the DIR. Accordingly, items can be displayed on a screen with a high level of visibility for easy recognition.

## Description

### BACKGROUND OF THE INVENTION

### 1. Field of the Invention:

The present invention relates to display systems. More particularly, the present invention relates to a method and apparatus for displaying screens including items in a touch screen-based mobile device.

### 2. Description of the Related Art:

Recently, mobile devices have been widely used because of easy portability and provide a variety of functions as well as a voice call function. The mobile devices serve as multimedia communication devices since they can provide a service for transmitting a variety of data and other various additional services. In addition, the mobile devices have been developed to be equipped with a touch screen, which have become popular. As most users gradually prefer touch screen-based mobile devices, the mobile device manufacturers have recognized the importance of touch interactions.

Also, recent touch screen-based mobile devices display at least one item on an idle screen or a menu screen and execute a function corresponding to an item touched by a user. However, conventional touch screen-based mobile devices have been uniformly displaying items in a certain region on the screen. If a number of items displayed on the screen increases, the ability to distinguish and select the items become difficult.

Therefore, a need exists for a method and apparatus for displaying items on a touch-screen based mobile device with easy recognition.

### SUMMARY OF THE INVENTION

An aspect of the present invention is to address at least the above-mentioned problems and/or disadvantages and to provide at least the advantages described below. Accordingly, an aspect of the present invention is to provide a method for displaying items on a screen with high level of visibility for easy recognition.

In accordance with an aspect of the present invention, a method for displaying screens in a display system is provided. The method includes setting at least one Activation Information Region (AIR) and at least one Deactivation Information Region (DIR) to a screen of the display system, displaying items on at least one set AIR and at least one set DIR, detecting a touch gesture applied to the AIR or the DIR, executing a function corresponding to the touch gesture applied to the AIR, and altering and displaying an image of at least one item in the DIR according to the touch gesture applied to the DIR.

In accordance with another aspect of the present invention, an apparatus for displaying screens is provided. The apparatus includes a display unit for displaying at least one item, a touch sensing unit for detecting a touch gesture, and a controller. The controller sets at least one AIR and at least one DIR to the screen. The controller controls the display unit for displaying items on at least one set AIR and at least one set DIR. The controller executes a function corresponding to the touch gesture applied to the AIR. The controller alters and displays an image of at least one item in the DIR according to the touch gesture applied to the DIR.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is illustrates a configuration of a mobile device according to an exemplary embodiment of the present invention;

FIG. 2 is a flowchart describing a method for displaying a screen according to an exemplary embodiment of the present invention;

FIG. 3 illustrates screens displayed on a mobile device according to an exemplary embodiment of the present invention;

FIG. 4 illustrates screens displayed on a mobile device when a user flicks on an Activation Information Region (AIR) according to an exemplary embodiment of the present invention;

FIG. 5 illustrates screens displayed on a mobile device when an item is tapped on an (AIR) according to an exemplary embodiment of the present invention;

FIG. 6 illustrates screens displayed on a mobile device in which one item is displayed on an AIR and a DIR, respectively, and switched there between when a touch is applied to the screen according to an exemplary embodiment of the present invention;

FIG. 7 illustrates a diagram of a plurality of idle screens in a mobile device according to an exemplary embodiment of the present invention;

FIG. 8 illustrates screens displayed on a mobile device when a touch screen is flicked in a right direction and then in an upper direction according to an exemplary embodiment of the present invention;

FIG. 9 illustrates screens displayed on a mobile device when the mobile device is tilted according to an exemplary embodiment of the present invention; and

FIG. 10 illustrates screens displayed on a mobile device when the mobile device is shaken according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Prior to explaining exemplary embodiments of the present invention, terminologies will be defined for the description below. The terms or words used in the present description and claims should not be limited by a general or lexical meaning, but instead should be analyzed as a meaning or concept through which the inventor defines and describes the present invention using his best effort, to comply with the idea of the present invention. Therefore, one skilled in the art will understand that the embodiments disclosed in the description and configurations illustrated in the drawings are only examples, and that there may be various modifications, alterations, and equivalents thereof to replace the embodiments at the time of filing this application.

The term 'Activation Information Region (AIR)' refers to a region that displays one or more items. The AIR more clearly displays items than a 'Deactivation Information Region (DIR)'. The items on the AIR may be displayed larger, by highlighting, or in a 3-dimensional graphic, compared to the items displayed on the DIR. The AIR may be a region in which a corresponding function may be executed according to a user's touch interaction. For example, if a user touches a particular item on the AIR on the screen of the mobile device, a function corresponding to the touched item may be executed in the mobile device.

The term 'DIR' has a relative concept, with respect to the AIR. The DIR is less clear in displaying items than the AIR. The items on the DIR may be displayed smaller or more dimly, compared with the items displayed on the AIR. The DIR may be a region in which any function is not executed according to a user's touch interaction. Although a user applies a touch onto a particular item in the DIR on the screen of the mobile device, the mobile device does not execute a function corresponding to the item.

In the following description, although an exemplary embodiment of the present invention is explained based on a mobile device with a touch screen, it should be understood that the present invention is not limited thereto. It should be understood that the present invention may also be applied to various types of touch screen-based display systems. Also, the present invention may be applied to all information communication devices, multimedia devices, and their applications, if the devices are equipped with a touch screen, for example, a digital broadcast receiving device, a Personal Digital Assistant (PDA), a smart phone, an International Mobile Telecommunication 2000 (IMT-2000) device, a Wideband Code Division Multiple Access (WCDMA) device, a Global System for Mobile communication/General Packet Radio Service (GSM/GPRS) device, a Universal Mobile Telecommunication Service (UMTS) device, and the like.

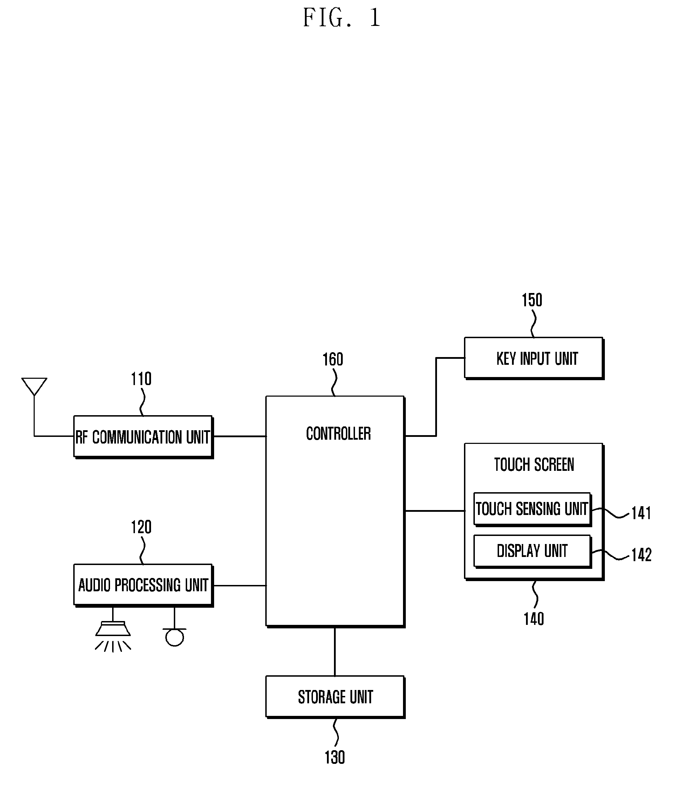

FIG. 1 illustrates a configuration of a mobile device according to an exemplary embodiment of the present invention.

Referring to FIG. 1, the mobile device includes a Radio Frequency (RF) communication unit 110, an audio processing unit 120, a storage unit 130, a touch screen 140, a key input unit 150, and a controller 160.

The RF communication unit 110 wirelessly transmits and receives data to and from other communication systems. The RF communication unit 110 includes an RF transmitter for up-converting the frequency of signals to be transmitted and amplifying the signals and an RF receiver for low-noise amplifying received RF signals and down-converting the frequency of the received RF signals. The RF communication unit 110 receives data via an RF channel and outputs the data to the controller 160. The RF communication unit 110 also transmits data output from the controller 160 to an external system, via the RF channel. In an exemplary implementation, the RF communication unit 110 receives on-line contents from a content server via a mobile communication network.

The audio processing unit 120 includes CODECs. The CODECs include a data CODEC for processing packet data, and the like, and an audio CODEC for processing audio signals, such as voice signals, and the like. The audio CODEC converts digital audio signals into analog audio signals and outputs the signals via a Speaker (SPK). The audio CODEC also converts analog audio signals received by a Microphone (MIC) into digital audio signals. In an exemplary implementation, the audio processing unit 120 outputs audio signals when the controller 160 executes a music playback application.

The storage unit 130 stores programs required to operate the mobile device and data generated when the programs are executed. The storage unit 130 includes a program storage area and a data storage area. In an exemplary implementation, the storage unit 130 is implemented with volatile storage media or non-volatile storage media or a combination thereof. The volatile storage media includes semiconductor memory, such as a Random Access Memory (RAM), a Dynamic Random Access Memory (DRAM), a Static Random Access Memory (SRAM), and the like. The non-volatile storage media includes a hard disk. In an exemplary implementation, the storage unit 130 stores image information regarding items displayed on a display unit 142 of the touch screen 140. The storage unit 130 stores setting information regarding the AIR and the DIR. The storage unit 130 may also store information regarding changes in the image of an item in the AIR or DIR when the AIR is switched to the DIR or vice versa.

The touch screen 140 includes a touch sensing unit 141 and a display unit 142. The touch sensing unit 141 detects whether a touching object touches the touch screen 140. The touching object may be a user's finger, a stylus pen, and the like. The touch sensing unit 141 may be implemented with various types of touch sensors, for example, a capacitive overlay type sensor, a resistive overlay type sensor, an infrared beam type sensor, a pressure sensor, and the like. It should be understood that the present invention is not limited to the above-described sensors. That is, the touch sensing unit 141 may be implemented with various types of sensors if the sensor detects touch or contact. The touch sensing unit 141 senses a user's touch applied to the touch screen 140, generates a touch input signal, and outputs the signal to the controller 160.

The display unit 142 is implemented with a Liquid Crystal Display (LCD). The display unit 142 displays menus, input data, function-setting information, and additional information. For example, the display unit 142 displays a booting screen, an idle screen, a call screen, application executing screens, and the like, of the mobile device. In an exemplary implementation, the display unit 142 distinguishes information regions and displays items on the distinguished information regions so that the user may easily identify the items. More particularly, the display unit 142 changes the image of the items and displays the items whether the items are located in the AIR or DIR. For example, the display unit 142 enlarges and displays the image of the item larger in the AIR than in the DIR.

The key input unit 150 receives key operating signals for controlling the mobile device, input by a user, and outputs the signals to the controller 160. The key input unit 150 may be implemented with a keypad with alphanumeric keys and direction keys. The key input unit 150 may be implemented as a function key at one side of the mobile device. However, the mobile device may not be equipped with the key input unit 150, if the mobile device is operated by only the touch sensing unit 141.

The controller 160 controls entire operations of the mobile device. The controller 160 sets the AIR and DIR on the screen and controls the display unit 142 to display at least one item in the AIR and DIR, respectively. The controller 160 changes images of the items and displays the images on the display unit 142, so that the items may be distinguished between in the AIR and in the DIR.

The controller 160 controls the touch sensing unit 141 to determine whether a touch gestures is performed on the AIR. If the controller 160 determines that a touch gesture is performed on the AIR, the controller 160 executes a function corresponding to the touch gesture. That is, the controller 160 executes different functions according to the performed touch gestures. Examples of the touch gestures include a tap, a drag, a flick, and the like. A tap gesture refers to an action where a user briefly touches the touch screen 140 with his/her finger, for example, and then removes therefrom without moving the finger. A drag gesture refers to an action where a user touches the touch screen 140 with his/her finger and then moves the finger thereover, without long contact, at a speed equal to or less than a preset value. A flick gesture refers to an action where a user touches the touch screen 140 with his/her finger, quickly moves his/her finger thereon at a speed equal to or greater than a preset value, and then release the touch therefrom. For example, if a user applies a tap gesture to a particular item in the AIR, the controller 160 executes a function corresponding to the touched item. If the user performs a drag or flick gesture on the AIR in which a list of items is displayed, the controller 160 may move and display the items on the display unit 142.

If the controller 160 ascertains that the touch sensing unit 141 detects a touch gesture in the DIR, the controller 160 switches the DIR to the AIR and also the AIR to the DIR simultaneously. The controller 160 controls the display unit 142 to reflect image information corresponding to the AIR to the items in the DIR and to display the image information. Simultaneously, the controller 160 also reflects image information corresponding to the DIR to the items in the AIR. For example, the controller 160 displays an item, contained in the DIR, in an enlarged image, and an item, contained in the AIR, in a reduced image. The controller 160 may be designed in such a way to process only a tap gesture, applied to the DIR, as an event. That is, if the user performs a tap gesture on the DIR, the controller 160 processes the tap gesture as an event and switches the DIR to the AIR and also the AIR to the DIR, simultaneously. On the contrary, if the user performs a drag or flick gesture, the controller 160 does not process the drag or flick gesture as an event and maintains the current screen state.

It should be understood that the mobile device may further include a motion sensor (not illustrated). Examples of a motion sensor may include an acceleration sensor, gyro sensor, terrestrial magnetic sensor, and the like. The mobile device detects a user's gesture and performs a corresponding function.

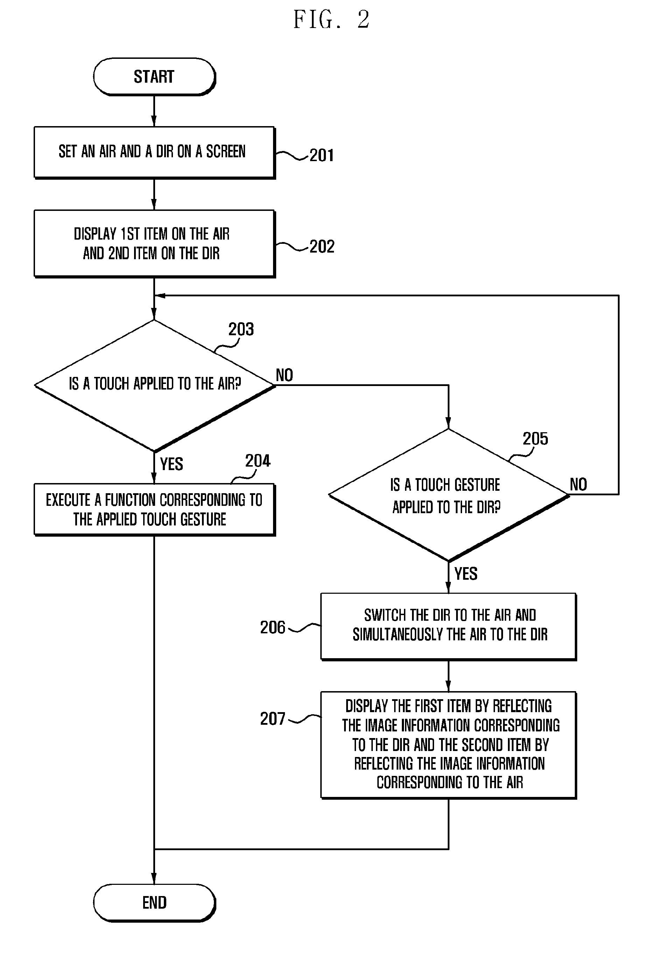

A configuration of the mobile device adapted to the screen displaying method has been described above. The screen displaying method will be described in more detail below with reference to FIG. 2.

FIG. 2 is a flowchart describing a method for displaying a screen according to an exemplary embodiment of the present invention.

The controller 160 sets an AIR and a DIR on a screen in step 201. The controller 160 divides the screen into two information regions and sets one region as an AIR and another region as a DIR. In an exemplary implementation, the controller 160 may divide the screen into three information regions and sets one region as an AIR and the other regions as DIRs. The controller 160 sets at least two divided regions as AIRs and a remaining divided region as the DIR. The controller 160 divides the screen horizontally so that the divided information regions may be aligned vertically. The controller 160 may also divide the screen vertically so that the divided information regions may be aligned horizontally. The controller 160 also distinguishes between a type of touch gesture detected in the AIR and a type of touch gesture detected in the DIR and sets the touch gesture. For example, the controller 160 controls the touch sensing unit 141 to detect various types of touch gestures, such as a tap, a drag, a flick, and the like, in the AIR or only a tap gesture in the DIR.

In an exemplary implementation, the controller 160 may differently set the types of touch gestures for generating events according to the AIR and the DIR. Although the controller 160 controls the touch sensing unit 141 to detect various types of touch gestures, the touch sensing unit may be set in such a way that it generates events corresponding to the various types of touch gestures in the AIR and an event corresponding to only a tap gesture in the DIR.

The controller 160 controls the display unit 142 to display a first item in the AIR and a second item in the DIR in step 202. The controller 160 controls the display unit 142 to display the first item, by reflecting image information corresponding to the AIR, and the second item, by reflecting image information corresponding to the DIR. Each of the first and second items may be configured as a single item or a list of items. In an exemplary implementation, a category of the first item may be identical to or different from the category of the second item. For example, if the first item corresponds to a list of on-line content items and the second item corresponds to a list of off-line content items, the first and second items are classified in different categories. On the other hand, if the first item corresponds to today's weather and the second item corresponds to tomorrow's weather, the first and second items are all classified into the same category, i.e., weather. In an exemplary implementation, the term 'category' refers to reference information to classify items and may be varied according to settings. For example, although an on-line content item and an off-line content item may be classified in different categories, the items may be classified in the same category, considering they are the content item. Likewise, although 'TODAY' weather and 'TOMORROW' weather items may be all classified in the same category, considering the items are all a weather item, the items may be classified in different categories.

The term 'image information corresponding to the AIR or the DIR refers to property of an item image displayed on a corresponding information region (AIR or DIR), such as the size, brightness, visibility, and the like. For example, if the size of the item image corresponding to the AIR and the DIR is set to '3' and `1' respectively, the controller 160 controls the display unit 142 to display the item image larger in the AIR than in the DIR. In an exemplary implementation, a range of a touch sensing area may be altered in the AIR and the DIR, according to the size of an item located in the AIR and the DIR.

The controller 160 controls the touch sensing unit 141 to determine whether a touch gesture is input to the AIR in step 203. If the user inputs various types of touch gestures, such as the tap, the drag, the flick, and the like, onto the touch screen 140, the touch sensing unit 141 detects the user's input touch gesture, generates a touch signal corresponding thereto, and outputs the touch signal to the controller 160. The controller 160 receives the touch signal, determines that the user has touched the AIR, and detects which type of gesture has been applied to the AIR.

If the controller 160 determines that a touch gesture has been applied to the AIR in step 203, the controller 160 executes a function corresponding to the user's applied touch gesture in step 204. If the user taps one of the items on the list displayed on the AIR, the controller 160 executes a function corresponding to the tapped item. If the tapped item corresponds to a content item, the controller 160 executes a music playback application or a moving image playback application and plays back the corresponding content. In addition, if the user performs the drag or the flick gesture on the AIR, the controller 160 controls the display unit 142 to alter the list of items and display the items. That is, the controller 160 controls the display unit 142 to move and display items in the list. For example, if the user performs the flick gesture, in an upper direction or a down direction, on the items listed in a vertical direction on the AIR, the controller 160 controls the display unit 142 to move the items on the list and to display the items.

On the contrary, if the controller 160 determines that a touch gesture has not been input to the AIR in step 203, the controller 160 controls the touch sensing unit 141 to determine whether a touch gesture is input to the DIR in step 205. The controller 160 receives a touch signal from the touch sensing unit 141 and determines whether the user touches the DIR according to the received touch signal. The controller 160 may generate an event to switch an information region with respect to the input of the various types of touch gestures or only the input of the tap gesture.

If the controller 160 determines that the touch gesture has been input to the DIR in step 205, the controller 160 switches the DIR to the AIR and simultaneously the AIR to the DIR in step 206. If the AIR has been set to be larger than the DIR, the controller 160 enlarges the DIR and switches the enlarged DIR to the AIR. Simultaneously, the controller 160 reduces the AIR and switches the reduced AIR to the DIR. In this case, the range of the touch sensing area may be altered according to the sizes of the AIR and the DIR. In addition, the controller 160 may alter and set the types of touch gestures to be detected. If the AIR is switched to the DIR, the range of touch sensing area is reduced and a condition where various types of touch gestures may be detected is also changed to a condition where only a tap gesture may be detected.

The controller 160 controls the display unit 142 to display the first item by reflecting the image information corresponding to the DIR and the second item by reflecting the image information corresponding to the AIR in step 207. For example, if the size of the item image corresponding to the AIR and the DIR is set to '3' and `1' respectively, the controller 160 controls the display unit 142 to reduce the image size of the first item and to display the first item. In addition, the controller 160 controls the display to enlarge the image size of the second item and to display the second item. The range of visible area, recognized by the user, may increase in the first item and decrease in the second item. In an exemplary implementation, the range of touch sensing areas of the AIR and the DIR may be altered according to the image sizes of items located in the AIR and DIR.

On the contrary, if the controller 160 determines that a touch gesture has not been input to the DIR in step 205, the controller 160 returns to step 203 where a determination is made as to whether a touch gesture is input to the AIR.

A description of the screen displaying method has been described above in which a screen is set to at least two information regions and displays items in the information regions, respectively. If a user touches one of the items in the information regions, the system executes a function corresponding to the user's input touch or alters and displays the item image. The screen displaying method will be described in more detail below.

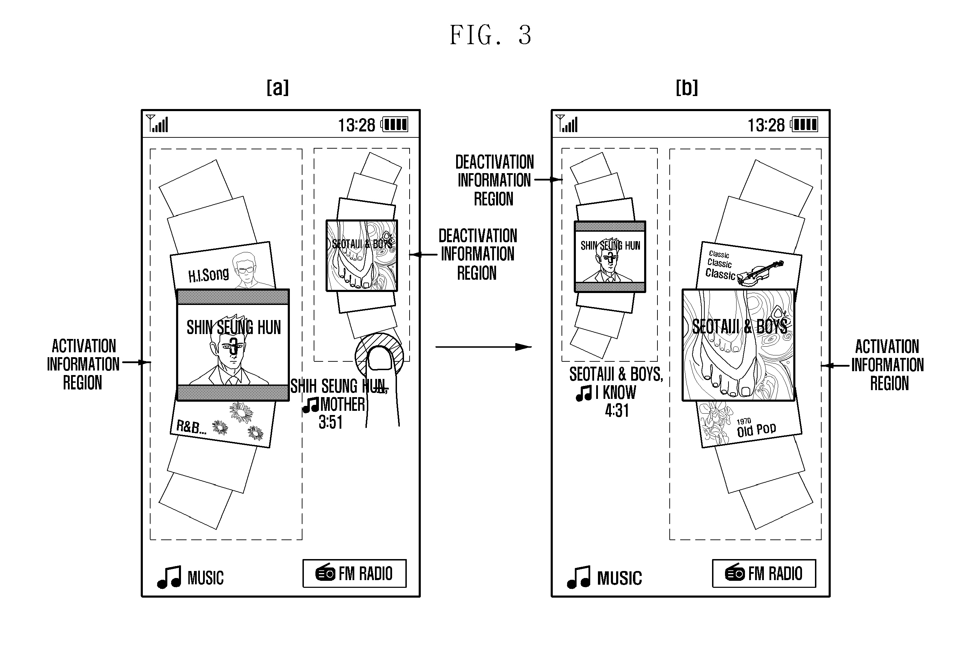

FIG. 3 illustrates screens displayed on a mobile device according to an exemplary embodiment of the present invention. The screens, illustrated in diagrams (a) and (b) of FIG. 3, may be an idle screen or a menu screen.

Referring to FIG. 3, diagram (a) illustrates a screen displaying items on distinguished information regions. The screen aligns and displays the information regions in the width direction, where the left information region corresponds to the AIR and the right corresponds to the DIR. The AIR displays a list of on-line content items and the DIR displays a list of off-line content items. The on-line content items refer to items corresponding to contents registered in a content server. Real data corresponding to the content is not stored in the mobile device. The controller 160 controls the RF communication unit 110 to receive a list of contents, registered in a content server, from the content server, via a mobile communication network. If the content corresponds to music, the controller 160 controls the RF communication unit 110 to receive a list of music contents and information regarding an image of the music album. The controller 160 receives a list of contents via the RF communication unit 110. Thereafter, the controller 160 creates items corresponding to respective contents, configures a list of content items, and displays the content items on the display unit 142.

In an exemplary implementation, when the controller 160 controls the display unit 142 to display items, the controller 160 aligns and displays the items vertically or horizontally, with respect to an item at the center of the screen (e.g., the center of the AIR or the DIR), by gradually increasing or decreasing the image sizes of the items. The controller 160 controls the display unit 142 to highlight the item at the center of the screen or to dim the remaining items except for the item at the center of the screen. The item at the center of the screen (e.g., the center of the AIR) may execute a corresponding function when it has experienced a user's touch. The remaining items except for the item at the center of the screen may be set in such a way that their functions are performed when they are touched, after a command corresponding to the item at the center of the screen has been input. As illustrated in diagram (a) of FIG. 3, the item including 'SHINSEUNGHUN 3' and an album image is displayed at the center of the AIR. When the user touches the item, the controller 160 executes a music playback application.

In an exemplary embodiment of the present invention, although an item, which may execute a function when a user touch gesture is performed, is located at the center of the screen (e.g., the center of the AIR), it should be understood that the present invention is not limited thereto. For example, the item may be located at any location within the AIR. In addition, although the user touches an item on the touch screen 140 to execute a function corresponding to the user's touched item, it should be understood that the present invention is not limited thereto. For example, if the mobile device is not equipped with a touch screen, the user may click an item using a cursor, and the like, and execute a corresponding function.

If a list of items is displayed on the information region, the controller 160 controls the display unit 142 to first display one of the items in the list and then display the remaining items, by vertically or horizontally extending them, with respect to the first displayed item. As illustrated in diagram (a) of FIG. 3, when the user inputs a screen switching command, the controller 160 controls the display unit 142 to first display only an item containing 'SHINSEUNGHUN 3' and an album image and then display the remaining items in the list, by vertically extending the list, after a certain period of time has elapsed. In an exemplary implementation, the controller 160 controls the display unit 142 to display the respective items by changing the information regarding frame depth, thereby distinguishing the items. That is, the controller 160 may control the display unit 142 to display the respective items by distinguishing the items by layer. The controller 160 displays the items on the display unit 142, by extending the items on a vertical straight line or a vertical curve (e.g., curved left) as illustrated in diagram (a) of FIG. 3.

In an exemplary implementation, when the controller 160 controls the display unit 142 to display an item, which includes 'SHINSEUNGHUN 3' and an album image, as illustrated in diagram (a) of FIG. 3, that may execute a corresponding function according to a user's input touch, the controller may display the property information regarding the corresponding function of the item, close to the item. For example, if the item corresponds to music content, the controller 160 controls the display unit 142 to display the property information regarding the music content, such as a 'singer,' a 'title,' a 'playback time,' and the like, close to the music content item. Referring to diagram (a) of FIG. 3, the mobile device displays 'SHINSEUNGHUN' as a singer, 'MOTHER' as a song title, and '3:51' as a 'playback time'.

In an exemplary implementation, the controller 160 may control the display unit 142 to further display the category information regarding a currently displayed item. For example, if the items currently displayed on a screen correspond to music content, the controller 160 may control the display unit 142 to display a text 'music' and a musical note image, together with the items. In this case, the user may easily recognize that the currently displayed items are related to music. Referring to diagram (a) of FIG. 3, text 'music' and a note image are displayed at a lower part of the AIR.

In an exemplary implementation, the controller 160 may control the display unit 142 to further display application information related to a currently displayed item. The application information may correspond to an icon for executing an application. For example, if the items currently displayed on a screen correspond to music content, the controller 160 controls the display unit 142 to display a 'radio' application icon related to the music content, together with the music content items. In this case, the user may rapidly execute an application related to the items, without switching screens. Referring to diagram (a) of FIG. 3, an icon for executing an application, i.e., an FM radio, is displayed on the lower part of the DIR.

When the user taps the DIR, the controller 160 switches the DIR to the AIR and simultaneously switches the AIR to the DIR. In this case, the touch sensing unit 141 creates a touch signal and outputs the touch signal to the controller 160. The controller 160 concludes that the touch is a tap gesture and the tapped location corresponds to the DIR, based on the received touch signal, and processes the tap gesture as an occurrence of an event. If the controller 160 concludes that a touch gesture is performed in the DIR and is the drag or the flick gesture, based on the received touch signal, the controller 160 may not process the touch gesture as an event. The controller 160 performs an information region switching operation and then controls the display unit 142 to change and display the items. That is, the controller 160 controls the display unit 142 to change and display the items according to image information corresponding to the AIR and the DIR. For example, the controller 160 controls the display unit 142 to reduce and display the items in the AIR. Simultaneously, the controller 160 controls the display unit 142 to enlarge and display the items in the DIR.

Referring to diagram (b) of FIG. 3, the mobile device illustrates a screen in which the user taps the DIR on the screen illustrated in diagram (a) of FIG. 3. The items displayed on the AIR illustrated in diagram (a) of FIG. 3 are reduced and displayed and the items displayed on the DIR are enlarged and displayed simultaneously. A music content item, including `SEOTAIJI & BOYS' and an album image, is displayed at the center of the AIR, as illustrated in diagram (b) of FIG. 3. The property information regarding the music content, singer (SEOTAIJI & BOYS), title (I Know), and playback time (4:31), is displayed at the left of the music content item. At the lower part of the DIR, text 'music' and a musical note image are displayed that correspond to the category information regarding the music content items. Likewise, at the lower part of the AIR, an application execution icon (i.e., an FM radio icon) related to the 'music' is displayed.

If the user performs the drag or the flick gestured on the AIR on which a list of items is displayed, the controller 160 controls the display unit 142 to move and display the items. If the user performs the drag or the flick gesture in the lower direction, the controller 160 moves and displays the items in the same direction. Likewise, if the user performs the drag or the flick gesture in the upper direction, the controller 160 moves and displays the items in the same direction.

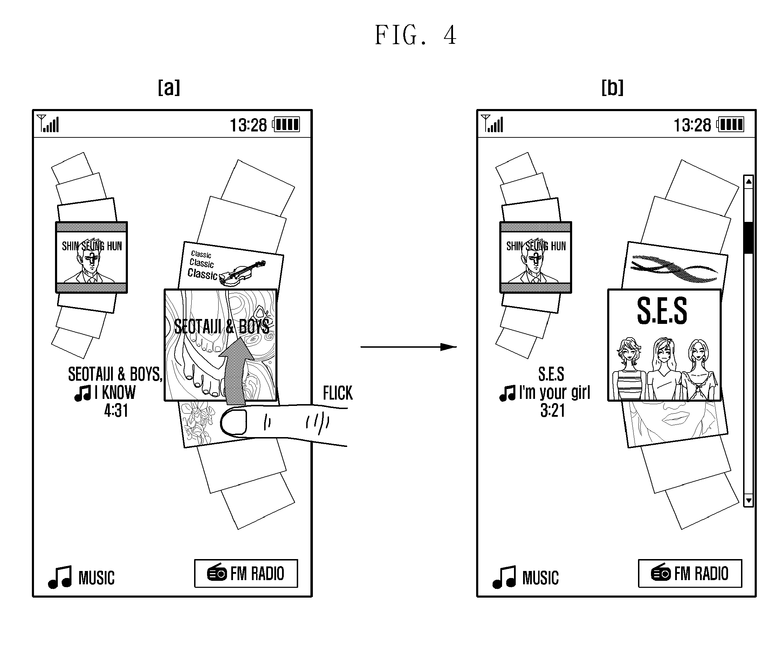

FIG. 4 illustrates screens displayed on a mobile device when a user flicks on an AIR according to an exemplary embodiment of the present invention.

Referring to FIG. 4, diagram (a) illustrates a screen when a user flicks the AIR on the screen illustrated in diagram (b) of FIG. 3, and diagram (b) of FIG. 4 illustrates a screen switched after the user has flicked the AIR. The controller 160 receives a touch signal from the touch sensing unit 141 and concludes that the user has flicked the AIR. The controller 160 controls the display unit 142 to move and display items in the list displayed on the AIR. In an exemplary implementation, the controller 160 may determine the speed of a user's input flick and move the items at the determined speed. In addition, the controller 160 may control the display unit 142 to further display a scroll bar matching the list of items. Referring to the scroll bar, the user may easily recognize where an item currently displayed at the center region is located in the list of items. As illustrated in diagram (b) of FIG. 4, a music content item, containing a singer 'S.E.S.' and an album image, is displayed at the center of the AIR. The property information regarding the music content, such as, a singer (S.E.S), a title (I'm Your Girl), and a playback time (3:21), is displayed at the left of the music content item. A scroll bar matching a list of music content items is displayed at the right of the music content item. The scroll bar shows information where the music content item displayed at the center region is located in the list of music content items.

If the user taps one of the items in the list displayed on the AIR, the controller 160 executes a function corresponding to the tapped item. If the user taps an item located at the center of the AIR, the controller 160 executes a function corresponding to the tapped item. Otherwise, if the user taps other items except for the item at the center, the controller 160 controls the display unit 142 to move and display the tapped item to the center of the AIR. If the user taps one of a list of on-line content items, located at the center of the AIR, the controller 160 controls the RF communication unit 110 to download content data corresponding to the tapped on-line content item from a content server and stores the content data in the storage unit 130. In an exemplary implementation, the controller 160 controls the display unit 142 to add the downloaded on-line content item to a list of off-line content items and to display the items.

If the user taps one of a list of off-line content items, located at the center of the AIR, the controller 160 executes contents corresponding to the tapped off-line content item. If the off-line content item corresponds to music, the controller 160 controls the audio processing unit 120 to output sound.

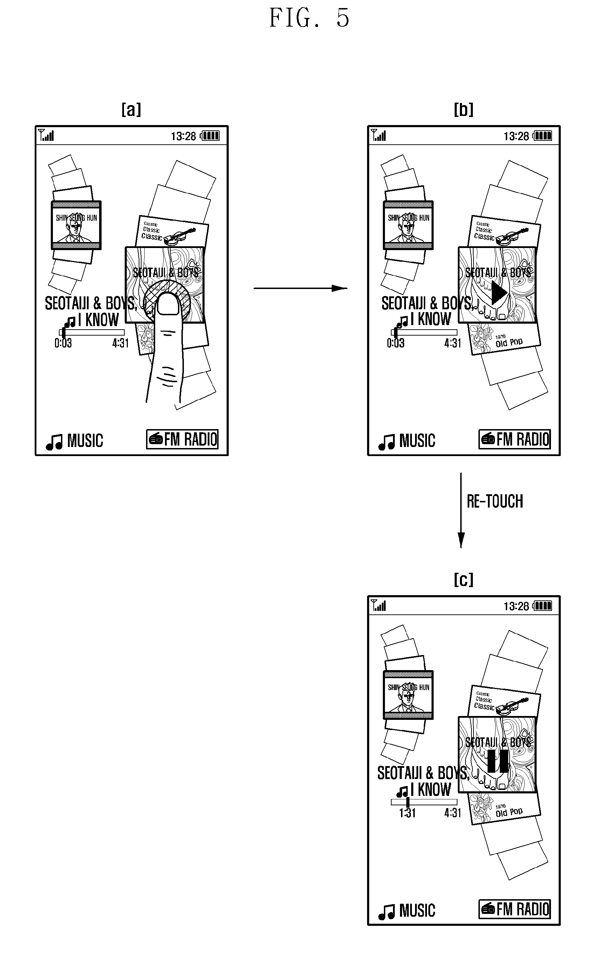

FIG. 5 illustrates screens displayed on a mobile device when an item is tapped on an AIR according to an exemplary embodiment of the present invention.

Referring to FIG. 5, diagram (a) illustrates a screen when a user taps a music content item located at the center of the AIR on the screen illustrated in diagram (b) of FIG. 3. Diagram (b) of FIG. 5 illustrates a screen switched after the user has tapped the music content item. Diagram (c) of FIG. 5 illustrates a screen switched after the user has re-tapped the same music content item. The controller 160 receives a touch signal from the touch sensing unit 141 and concludes that the user has tapped a particular music content item in the AIR. In this case, the controller 160 controls the audio processing unit 120 to output a corresponding sound. The controller 160 may also control the audio processing unit 120 to output only sound, while continuing to display the current screen. When the user re-taps the same music content item while the controller 160 is outputting corresponding sound via the audio processing unit 120, the controller 160 may control the audio processing unit 120 to pause the output of sound.

When the controller 160 controls the audio processing unit 120 to output sound, the controller 160 may also control the display unit 142 to switch a current screen to a music playback application executing screen and display the music playback application executing screen. For example, the controller 160 may control the display unit 142 to display a 'playback' or 'pause' image within the music content item while a current screen is being displayed. In addition, when the controller 160 controls the audio processing unit 120 to output sound, the controller 160 may also control the display unit 142 to display a music playback scroll bar, close to the music content item, so that the user may recognize the playback time of the music via the scroll bar.

Referring to diagram (b) of FIG. 5, an image corresponding to 'playback' is displayed within the music content item that contains a singer 'SEOTAIJI & BOYS' and an album image. A music playback scroll bar is also displayed at the left of the music content item. Referring to diagram (c) of FIG. 5, an image corresponding to 'pause' is displayed within the music content item and a music playback scroll bar is also displayed at the left of the music content item. In an exemplary implementation, although the music playback application is explained based on 'playback' and 'pause', it should be understood that the present invention is not limited thereto. For example, the music playback application may also include other functions, such as 'next music playback' and 'previous music playback'. Also, if a user double-taps a music content item, the controller 160 may control the audio processing unit 120 to output audio signals of the next music.

In an exemplary implementation, the AIR and the DIR may also display one item as well as a list of items. If the AIR and the DIR displays one item and a user touches the item, the controller 160 may control the display unit 142 to activate the touched item and to display the item on a corresponding information region. The controller 160 may control the display unit 142 to separate frames of the AIR and the DIR and then display the frames by changing the information regarding the frame depth.

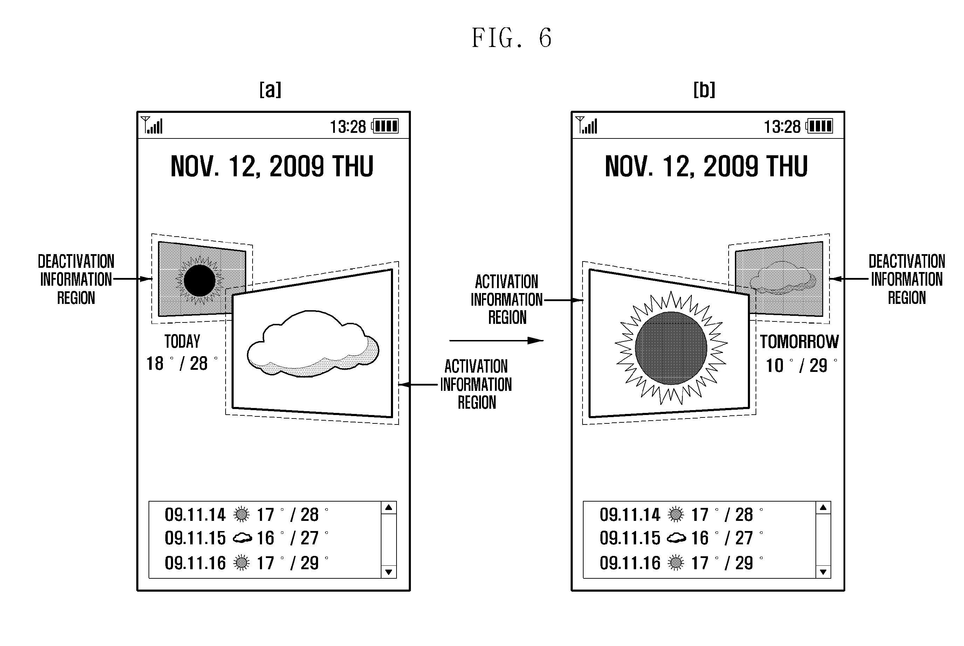

FIG. 6 illustrates a screen displayed on a mobile device in which one item is displayed on an AIR and a DIR, respectively, and switched between when touch is applied to the screen according to an exemplary embodiment of the present invention.

Referring to FIG. 6, diagram (a) illustrates a screen on which weather information is displayed when a mobile device is operated in an idle mode. The DIR is located on the left of the screen and the AIR is located on the right of the screen. A 'TOMORROW' weather item is displayed in the DIR and a 'TODAY' weather item is displayed in the AIR. The 'TOMORROW' weather item is smaller and dimmer than the 'TODAY' weather item. That is, the 'TODAY' weather item is larger and brighter than the 'TOMORROW' weather item. In the screen illustrated in diagram (a) of FIG. 6, the 'TODAY' and the 'TOMORROW' weather items are displayed via separated frames. The 'TODAY' weather item displaying frame is located higher than the 'TOMORROW' weather item displaying frame. In addition, the screen, as illustrated in diagram (a) of FIG. 6, displays temperature at the left of the 'TODAY' weather item. The 'TODAY' weather item has an image corresponding to today's weather, for example, a cloud image to inform of cloudy weather.

In an exemplary implementation, the controller 160 may control the display unit 142 to further display windows for illustrating information regarding items located in the AIR and the DIR. As illustrated in diagram (a) of FIG. 6, the screen displays a window for informing a weekly weather forecast, located at the lower part of the 'TODAY' and the 'TOMORROW' weather items.

When the user taps an item in the DIR, the controller 160 switches the DIR to the AIR and activates the item in the DIR switched to the AIR. That is, the controller 160 changes the image of the item deactivated in the DIR to the image of the item activated in the AIR.

Diagram (b) of FIG. 6 illustrates a screen that is switched from the screen, illustrated in diagram (a) of FIG. 6, when the user has tapped the 'TOMORROW' weather item displayed on the screen illustrated in diagram (a) of FIG. 6. That is, as illustrated in diagram (b) of FIG. 6, the 'TOMORROW' weather item is activated and the 'TODAY' weather item is deactivated. In this case, the 'TODAY' weather item frame is located lower than the 'TOMORROW' weather item frame.

In an exemplary implementation, the screen displaying the items may be an idle screen of the mobile device. The mobile device may include a plurality of idle screens. The idle screen described above may be one of the idle screens. The plurality of idle screens may be classified into preset categories. The mobile device may switch idle screens according to a user's touch gestures.

The mobile device may switch between idle screens in the same category or switch an idle screen in one category to an idle screen in another category, according to the directions of a user's touch gestures. When the user performs a touch gesture on the touch screen 140, the touch sensing unit 141 creates a touch signal and outputs the TOUCH signal to the controller 160. The controller 160 detects a direction of the user's touch gesture according to the received touch signal. If the controller 160 determines that the user performs a directional touch gesture, for example, a drag or a flick gesture, on the touch screen 140, the controller 160 controls the display unit 142 to switch a current screen to an idle screen according to the direction of the user's touch gesture.

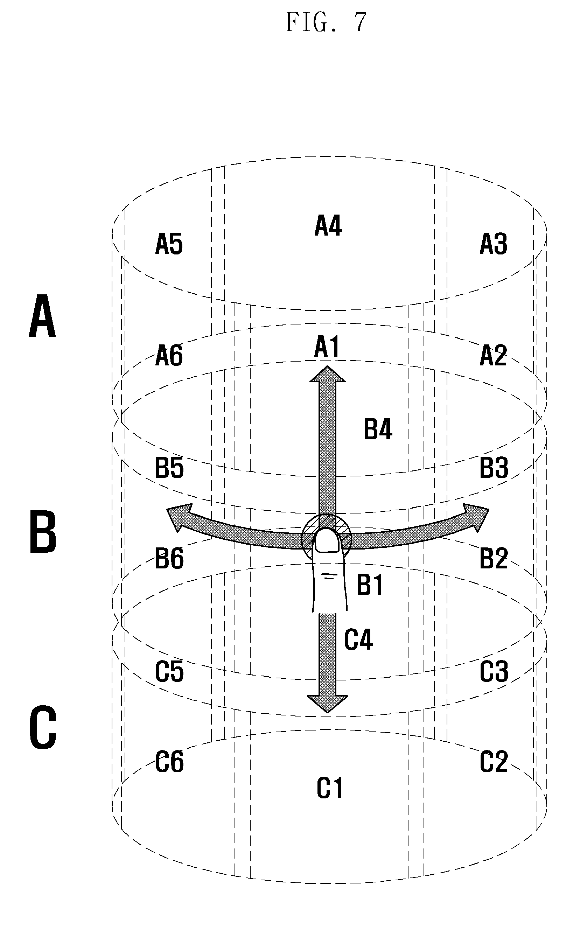

FIG. 7 is a view illustrating a diagram of a plurality of idle screens in a mobile device according to an exemplary embodiment of the present invention.

Referring to FIG. 7, the idle screens are designed with three stages, A, B, and C. The idle screens including the same English letter belong to the same category. For example, idle screens A1 to A6 belong to the same category. Likewise, idle screens B1 to B6 belong to the same category, and idle screens C1 to D6 belong to the same category. That is, idle screen A1 and B1 belong to different categories. In an exemplary implementation, a default idle screen may be set from among the plurality of idle screens. It is assumed herein that idle screen B1 has been set as a default idle screen. If the user performs a flick gesture in the upper direction on the touch screen 140 on which the default idle screen B1 is being displayed, the mobile device switches the default idle screen B1 to an idle screen C1. Likewise, if the user performs a flick gesture in the lower direction on the touch screen 140, the mobile device switches the default idle screen B1 to an idle screen A1. In addition, if the user performs a flick gesture in the right direction on the touch screen 140 on which the default idle screen B1 is being displayed, the mobile device switches the default idle screen B1 to an idle screen B6. Likewise, if the user performs a flick gesture in the left direction on the touch screen 140, the mobile device switches the default idle screen B1 to an idle screen B2. As described above, if the user performs a flick gesture in the upper direction or the lower direction, the mobile device switches an idle screen in one category to an idle screen in another category. In addition, if the user performs a flick gesture in the right direction or the left direction, the mobile device switches one idle screen to another in the same category.

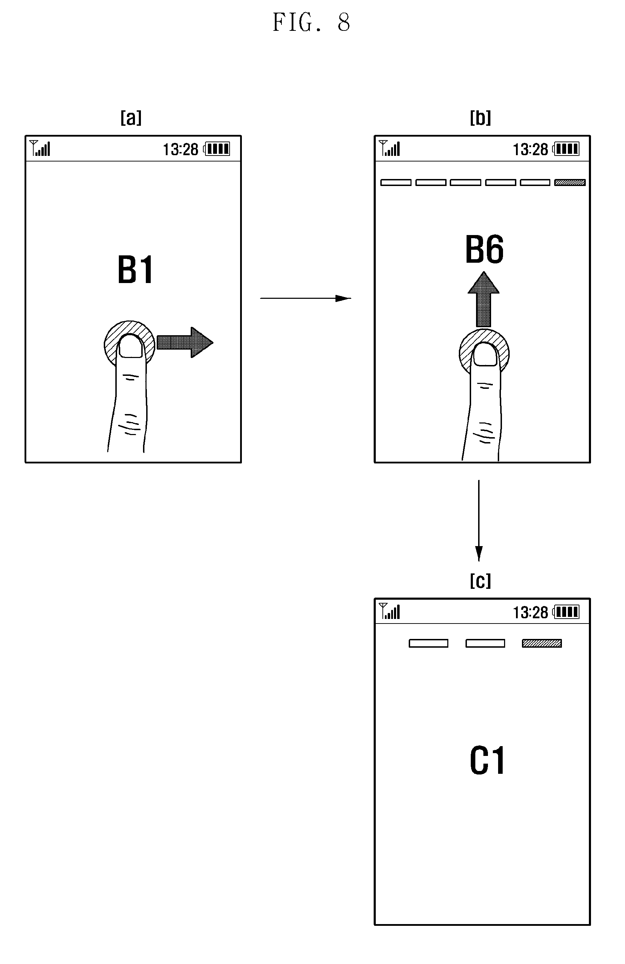

FIG. 8 illustrates screens displayed on a mobile device when a user flicks on a touch screen in a right direction and then flicks in an upper direction according to an exemplary embodiment of the present invention.

Referring to FIG. 8, diagram (a) illustrates a screen in which the user intends to perform the flick gesture in the right direction on the touch screen 140 on which idle screen B1 has been displayed. Diagram (b) of FIG. 8 illustrates an idle screen B6 switched from idle screen B1 when the user has performed a flick gesture in the right direction on the touch screen 140. In an exemplary implementation, the controller 160 may control the display unit 142 to display an image of an idle screen page as well. The right flick or the left flick corresponds to a command for switching an idle screen to another screen in the same category. If the right flick or left flick is performed on the touch screen 140, the controller 160 controls the display unit 142 to display images representing idle screen pages, considering the number of idle screens in the same category. For example, diagram (b) of FIG. 8 illustrates the images, for example six bars, on the upper part of the screen which denotes that the number of idle screens is six in the same category. More particularly, the sixth bar of the six bar images is highlighted which denotes that the current idle screen corresponds to the sixth idle screen.

Diagram (b) of FIG. 8 illustrates an idle screen C1 switched from idle screen B6 when the user has performed the flick gesture in the upper direction on the touch screen 140. The upper flick or the lower flick corresponds to a command for switching an idle screen in one category to an idle screen in another category. If the upper flick or the lower flick is performed on the touch screen 140, the controller 160 controls the display unit 142 to display images representing idle screen pages, considering the number of categories. For example, diagram (c) of FIG. 8 illustrates the images, for example three bars, on the upper part of the screen which denotes that the number of categories is three in total. More particularly, the third bar image of the three bar images is highlighted which denotes that the current idle screen corresponds to one of the idle screens in the third category.

In an exemplary implementation, the mobile device may switch and display idle screens according to a user's motions applied thereto. For example, if the user tilts the mobile device by 90°, it may reduce a plurality of idle screens in a reduced form, for example, an item or a thumbnail, and may display the idles screen in one screen. Also, the mobile device is equipped with a motion sensor for sensing a user's motion applied thereto. If the user applies a motion to the mobile device, the motion sensor creates a detected signal and outputs the detected signal to the controller 160. The controller 160 detects the user's applied motion based on the received detected signal. In an exemplary implementation, it is assumed herein that the user tilts the mobile device by 90°. The controller 160 controls the display unit 142 to reduce a plurality of idle screens displayed in a reduced form and to display the idle screen. In this case, the controller 160 may control the display unit 142 to switch the portrait screen to the landscape screen. The controller may control the display unit 142 to enlarge or highlight an activated idle screen that may be switched to a full screen according to a user's tap gesture compared to the other idle screens. If the user flicks the touch screen 140, the controller 160 controls the display unit 142 to move and display idle screens. In this case, the activated idle screen is also altered to another screen. If the user taps the activated idle screen, the controller 160 controls the display unit 142 to alter the tapped idle screen to a full screen.

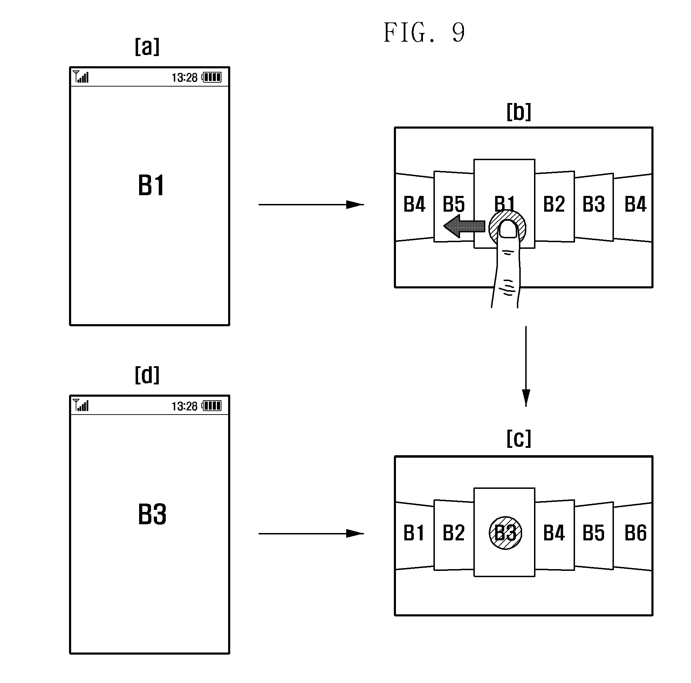

FIG. 9 illustrates screens displayed on a mobile device when the mobile device is tilted according to an exemplary embodiment of the present invention.

Referring to FIG. 9, diagram (a) illustrates a screen when the mobile device is posed in upright posture (i.e., where the speaker is located higher than the microphone). For example, the screen may be idle screen B1. Diagram (b) illustrates a screen where the mobile device is tilted by 90°. In this case, the mobile device reduces idle screens B1 to B6 in a thumbnail form. In an exemplary implementation, the thumbnail idle screens B1 to B6 are arranged lengthwise and displayed on the landscape screen. The idle screen B1 corresponds to an activated idle screen that may be switched to a full screen according to a user's tap gesture.

Diagram (c) of FIG. 9 illustrates a screen when the user flicks the screen illustrated in diagram (b) of FIG. 9 in a left direction. For example, the screen may be idle screen B3. Diagram (d) of FIG. 9 illustrates a screen when the user taps the idle screen B3 illustrated in diagram (c) of FIG. 9. The idle screen B3 is displayed in full screen on the portrait screen. If the user taps the idle screen B1 while the idle screen B3 is being displayed as an activated idle screen, the mobile device may switch the idle screen B1 to a full screen.

In an exemplary implementation, the mobile device may alter its displayed screen according to a user's shaking motion. In this case, the mobile device includes a plurality of idle screens and one of the idle screens has been previously set as a default idle screen. For example, if the user flicks the touch screen 140 as illustrated in FIG. 8, the controller 160 controls the display unit 142 to perform an idle screen switching operation and display a corresponding idle screen. When the user shakes the mobile device, the controller 160 detects the user's shaking motion via a motion sensor and controls the display unit 142 to switch a current screen to a default idle screen.

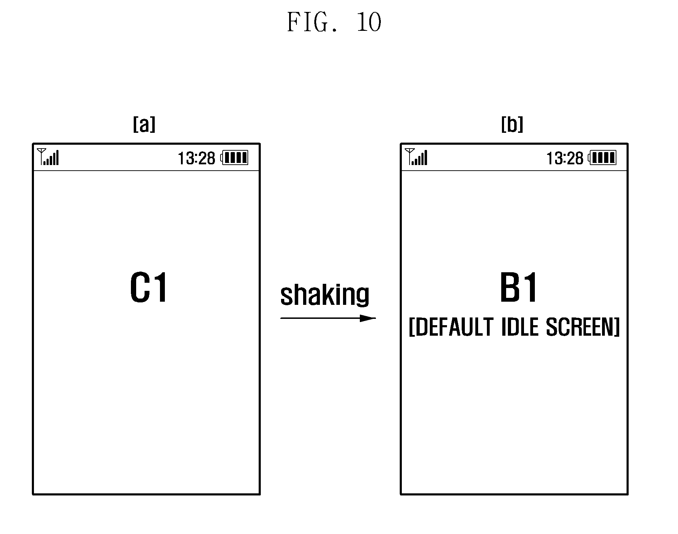

FIG. 10 illustrates screens displayed on a mobile device when the mobile device is shaken according to an exemplary embodiment of the present invention. It is assumed herein that B1 is set as a default idle screen. Diagram (a) of FIG. 10 illustrates an idle screen C1. Diagram (b) of FIG. 10 illustrates the default idle screen B1 switched from the idle screen C1 when the user shakes the mobile device that is displaying the idle screen C1.

In an exemplary implementation, the controller 160 may detect a number of shaking motions applied to the mobile device via the motion sensor and perform corresponding functions according to the number of shaking motions. Although the number of shaking motions detected by the controller has been described, it should be understood that the present invention is not limited thereto. For example, the controller may detect a snapping motion where a user moves the mobile device in a particular direction at a certain speed equal to or greater than a preset value.

As described above, the mobile device sets its screen to at least two information regions and displays items on the respective information regions. The mobile device executes a function corresponding to an item touched by the user or alters an image of the touched item. In this case, visibility of the item is increased by the mobile device user. If the mobile device has a plurality of screens, the screens can be selected by a touch interaction or motion interaction. This allows the user to intuitively select items in the screen.

As described above, the screen displaying method according to exemplary embodiments of the present invention can be implemented with program commands that can be conducted in various types of computers and recorded in computer-readable recording media. The computer-readable recording media contain program commands, data files, data structures, or the like, or a combination thereof. The program commands recorded in the recording media may be designed or configured to comply with the present invention or may be software well-known to the ordinary skilled person in the art.

The computer-readable recoding media includes hardware systems for storing and conducting program commands. Examples of the hardware systems are magnetic media such as a hard disk, a floppy disk, a magnetic tape, optical media such as a Compact Disk Read Only Memory (CD-ROM) and a Digital Video Disc (DVD), Magneto-Optical Media, such as an optical disk, a ROM, a RAM, a flash memory, and the like. The program commands include assembly language or machine code complied by a complier and a higher level language interpreted by an interpreter. The hardware systems may be implemented with at least one software module to comply with the present invention.

As described above, the method and apparatus according to exemplary embodiments of the present invention can display items on the screen of the mobile device, with a high level of visibility, so that a user can easily recognize the items and correctly select a corresponding item, which prevents a malfunction if incorrectly touched.

While the invention has been shown and described with reference to certain exemplary embodiments thereof, it will be understood by those skilled in the art that various changes in form and details may be made therein without departing from the spirit and scope of the invention as defined in the appended claims and their equivalents.

## Claims

1. A method for displaying screens in a display system, the method comprising:
setting at least one Activation Information Region (AIR) and at least one Deactivation Information Region (DIR) to a screen of the display system;
displaying items on at least one set AIR and at least one set DIR;
detecting a touch gesture applied to at least one of the AIR and the DIR;
executing a function corresponding to the touch gesture applied to the AIR; and
altering and displaying an image of at least one item in the DIR according to the touch gesture applied to the DIR.

2. The method of claim 1, wherein the displaying of the items comprises displaying items larger in the AIR than in the DIR.

3. The method of claim 1, wherein the touch gesture comprises at least one of:
a tap gesture including a touch action briefly applied to the screen and then released therefrom without moving a touched location;
a drag gesture including a touch action applied to the screen and moved over the screen, at a speed at least one of equal to and less than a preset value; and
a flick gesture including a touch action applied to the screen wherein the touched location is quickly moved at a speed at least one of equal to and greater than a preset value and then released.

4. The method of claim 3, wherein the executing of the function corresponding to the touch gesture applied to the AIR comprises moving and displaying items in the AIR if at least one of the drag and the flick gesture is detected in the AIR.

5. The method of claim 3, wherein the executing of the function corresponding to the touch gesture applied to the AIR comprises executing, if the tap gesture is applied to an item in the AIR, a function corresponding to the tapped item.

6. The method of claim 3, wherein the altering and the displaying of the image of at least one item in the DIR comprises enlarging and displaying, if the tap gesture is applied to the DIR, at least one item in the DIR.

7. The method of claim 1, wherein the executing of the function corresponding to the touch gesture applied to the AIR further comprises reducing and displaying at least one item in the AIR.

8. An apparatus for displaying screens, the apparatus comprising:
a display unit for displaying at least one item;
a touch sensing unit for detecting a touch gesture; and
a controller for setting at least one Activation Information Region (AIR) and at least one Deactivation Information Region (DIR) to the screen, for controlling the display unit to display items on at least one set AIR and at least one set DIR, for executing a function corresponding to the touch gesture applied to the AIR, and for altering and displaying an image of at least one item in the DIR according to the touch gesture applied to the DIR.

9. The apparatus of claim 8, wherein the items are displayed larger in the AIR than in the DIR.

10. The apparatus of claim 8, wherein the touch gesture comprises at least one of a tap gesture, a drag gesture and a flick gesture.

11. The apparatus of claim 10, wherein the tap gesture comprises a touch action briefly applied to the screen and then released therefrom without moving a touched location, the drag gesture comprises a touch action applied to the screen and moved over the screen, at a speed at least one of equal to and less than a preset value, and a flick gesture comprises a touch action applied to the screen wherein the touched location is quickly moved at a speed at least one of equal to and greater than a preset value and then released.

12. The apparatus of claim 10, wherein the executing of the function corresponding to the touch gesture applied to the AIR comprises moving and displaying items in the AIR if at least one of the drag and the flick gesture is detected in the AIR.

13. The apparatus of claim 10, wherein the executing of the function corresponding to the touch gesture applied to the AIR comprises executing, if the tap gesture is applied to an item in the AIR, a function corresponding to the tapped item.

14. The apparatus of claim 10, wherein the altering and the displaying of the image of at least one item in the DIR comprises enlarging and displaying, if the tap gesture is applied to the DIR, at least one item in the DIR.

15. The apparatus of claim 10, wherein the executing of the function corresponding to the touch gesture applied to the AIR further comprises reducing and displaying at least one item in the AIR.
